# DEMANDE DE BREVET EUROPEEN

(11) **EP 3 281 518 A1**
(43) Date de publication de la demande: **14.02.2018**
(21) Numéro de dépôt: 17184932.6
(22) Date de dépôt: 04.08.2017
(51) Int. Cl.: A01K 1/01

(54) **MODULE DE COMMANDE A DISTANCE D'UN SYSTEME DE RACLAGE, SYSTEME DE RACLAGE, INSTALLATION AGRICOLE, ET PROCEDE DE COMMANDE**

(30) Priorité: 09.08.2016 FR 1657660
(71) Demandeur: CK Industries, 42130 Marcoux (FR)
(72) Inventeur: RAYNAUD, Eric, 42110 Feurs (FR)
(74) Mandataire: Cabinet Laurent & Charras

(57) **Abrégé**

La présente invention concerne un module (20) de commande à distance d'un système de raclage équipant une installation agricole, le module (20) comprenant un dispositif de communication sans fil configuré pour transmettre, d'une part, au moins certaines informations (A) en provenance du système de raclage vers un terminal mobile (30) et, d'autre part, des ordres (B) en provenance du terminal mobile (30) vers le système de raclage. L'invention concerne également un système de raclage comprenant un tel module (20), une installation agricole comprenant un tel système, et un procédé de commande d'un tel système.

## Description

La présente invention concerne un module de commande à distance d'un système de raclage. L'invention concerne également un système de raclage comprenant un tel module, une installation agricole comprenant un tel système, et un procédé de commande d'un tel système. Le domaine de l'invention est celui des élevages agricoles, notamment pour bovins, caprins, ovins et/ou porcins.

De nos jours, la qualité de production, la sécurité et le confort animal sont des engagements permanents pour les élevages. Un nettoyage fréquent et de qualité des aires d'exercices des animaux contribue à satisfaire ces exigences.

Le nettoyage d'une voie peut être effectué par raclage automatique, sans nécessiter de présence de l'éleveur ou de surveillance de l'installation, par exemple deux fois par jour. Le raclage automatique peut être complété par une intervention de l'éleveur (nettoyage au jet d'eau, racleur manuel, etc), à une fréquence plus réduite.

Ainsi, il est connu des installations agricoles comprenant une aire recevant des animaux et un système de raclage automatique de cette aire. L'aire comporte une ou plusieurs voies recevant les animaux. Le système de raclage comporte un racleur mobile sur chaque voie, un dispositif actionneur et un boitier de commande. L'actionneur est prévu pour déplacer le racleur sur la voie, dans une direction avant ou arrière, entre deux butées avant et arrière.

Le boitier de commande est programmé pour commander l'actionneur à intervalles de temps réguliers, afin de réaliser le raclage automatique. Le boitier de commande comporte également des boutons permettant à l'éleveur d'entrer des ordres de commande particuliers. Le boitier de commande comporte également un écran permet à l'éleveur de lire des informations relatives au système de raclage.

Lors du raclage, si un animal est présent sur une voie, le racleur vient en butée contre l'animal. Le boitier de commande détecte une montée d'intensité électrique, provoquant l'arrêt de l'actionneur et du racleur. Généralement, l'animal a alors le réflexe de quitter la voie.

Par sécurité, une intervention manuelle de l'éleveur sur le boitier de commande est alors requise pour remettre le système de raclage en fonctionnement.

Le but de la présente invention est de proposer un module améliorant la mise en oeuvre du système de raclage.

A cet effet, l'invention a pour objet un module de commande à distance d'un système de raclage équipant une installation agricole, le module comprenant un dispositif de communication sans fil configuré pour transmettre, d'une part, au moins certaines informations en provenance du système de raclage vers un terminal mobile et, d'autre part, des ordres en provenance du terminal mobile vers le système de raclage.

Ainsi, l'invention permet à l'éleveur de communiquer de manière simple, pratique et rapide avec chacun des systèmes de raclage équipant son élevage. L'éleveur est informé en temps réel des conditions de fonctionnement de chaque racleur. En réponse, l'éleveur peut intervenir sans délai et sans présence sur place, en pilotant à distance les actions de son choix. L'invention permet de paramétrer des cycles de raclage plus fréquents qu'avec les systèmes existants, par exemple toutes les deux heures. Grâce à l'invention, l'éleveur optimise son temps de travail et améliore sa productivité, tout en préservant la sécurité de son installation et de ses bêtes. Avantageusement, le module est facile à intégrer aux boitiers de commande des systèmes de raclage existants.

Selon d'autres caractéristiques avantageuses du module selon l'invention, prises isolément ou en combinaison :
- Le dispositif de communication sans fil comprend une carte SIM et est configuré pour envoyer les informations et recevoir les ordres par SMS.
- Les informations transmissibles au terminal mobile par le module comprennent les suivantes : retour en butée avant, retour en butée arrière, et les ordres transmissibles au système de raclage par le module comprennent les suivants : déplacement en butée avant, déplacement en butée arrière.
- Les informations transmissibles au terminal mobile par le module comprennent les suivantes : coupure secteur, défaut sur voie, arrêt sur voie, seuil de température bas atteint.
- Les ordres transmissibles au système de raclage par le module comprennent les suivants : démarrage cycle de raclage, arrêt cycle de raclage, et optionnellement, activation / arrêt du mode hors gel.
- Le module est configuré pour envoyer un message régulier au terminal mobile pour indiquer un état de fonctionnement.
- La fréquence du message est paramétrable dans le module, par exemple toutes les six heures, tous les jours à heure fixe, ou toutes les semaines à jour et heure fixe.
- Le message est quotidien.
- Le message concerne l'état de fonctionnement du système de raclage.
- Le message concerne l'état de fonctionnement du module.
- Le module est configuré pour recevoir des données de mise à jour à distance, sans intervention manuelle.

L'invention a également pour objet un système de raclage, comprenant : au moins un racleur mobile dans une aire prévue pour recevoir des animaux ; un dispositif actionneur prévu pour déplacer le racleur dans une direction avant ou une direction arrière, un boitier de commande prévu pour commander le dispositif actionneur, et un module tel que mentionné ci-dessus, connecté au boitier de commande.

De préférence, le module est intégré au boitier de commande.

L'invention a également pour objet une installation agricole, comprenant : une aire prévue pour recevoir des animaux ; un système de raclage incluant au moins un racleur mobile dans l'aire, un dispositif actionneur prévu pour déplacer le racleur dans une direction avant ou une direction arrière, et un boitier de commande prévu pour commander le dispositif actionneur ; un module tel que mentionné ci-dessus, connecté au boitier de commande ; et un terminal mobile qui, via le module, reçoit des informations relatives au système de raclage et envoie des ordres au système de raclage.

L'invention a également pour objet un procédé de commande à distance d'un système de raclage équipant une installation agricole telle que mentionnée ci-dessus, le procédé étant caractérisé en ce que :
- le module reçoit en continue des informations du système de raclage, et transmet au moins certaines de ces informations au terminal mobile ;
- sur le terminal mobile, un éleveur peut consulter les informations reçues du module et, en réponse, envoyer des ordres au module, qui les transmet au boitier de commande du système de raclage.

L'invention sera mieux comprise à la lecture de la description qui va suivre, donnée uniquement à titre d'exemple non limitatif et faite en référence aux dessins annexés sur lesquels :
- la figure 1 est une vue de dessus d'une installation agricole conforme à l'invention, comprenant une aire prévue pour recevoir des animaux, un système de raclage équipant cette aire, un module de commande à distance du système de raclage, et un terminal mobile connecté à ce module ;
- les figures 2, 3 et 4 sont des vues analogues à la figure 1, montrant des variantes de l'invention ; et
- la figure 5 est une vue de face, à plus grande échelle, du terminal mobile et du module de commande à distance intégré au boitier de commande équipant le système de raclage.

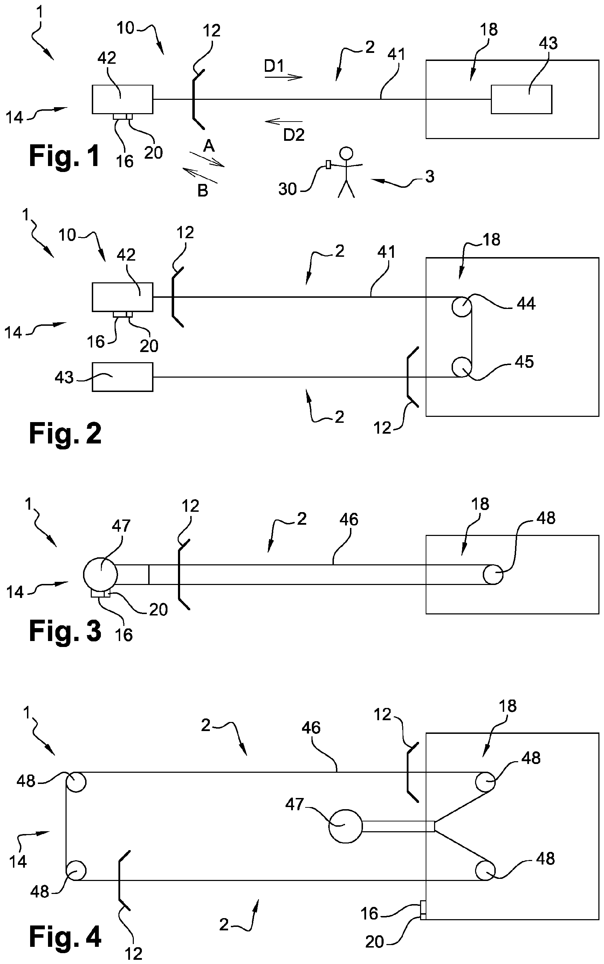

Sur la figure 1 est représentée une installation agricole 1 conforme à l'invention.

L'installation 1 comprend une aire 2 prévue pour recevoir des animaux, un système de raclage 10 de cette aire 2, un module 20 et un téléphone mobile 30 appartenant à un éleveur 3.

L'éleveur 3 et son téléphone 30 sont représentés proches de la voie 2 dans un but de simplification. En pratique, ils peuvent se trouver à des centaines de mètres, voire des kilomètres de l'aire 2, grâce au module 20 équipant le système 10.

Le système de raclage 10 comprend un racleur 12, un dispositif actionneur 14, un boitier de commande 16 et une fosse 18. Le racleur 12 est mobile dans l'aire 2 pour son nettoyage. Le dispositif actionneur 14 est conçu pour déplacer le racleur 12 selon une direction avant D1 ou une direction arrière D2. Le boitier de commande 16 est conçu pour commander le dispositif actionneur 14.

Sur l'exemple de la figure 1, le dispositif actionneur 14 comprend un câble 41 allongé entre un treuil arrière 42 et un treuil avant 43. Le racleur 12 est fixé sur le câble 41, qui est sélectivement enroulable / déroulable sur le treuil 42 et inversement sur le treuil 43, de manière à déplacer le racleur 12 suivant la direction D1 ou D2.

Le dispositif actionneur 14 est conçu pour déplacer le racleur 12 uniquement dans les directions D1 et D2. Autrement dit, le racleur 12 est mobile uniquement suivant les directions D1 et D2.

Le module 20 est connecté au boitier de commande 16. De préférence, le module 20 est conçu pour être intégré au boitier 16.

Le module 20 émet des informations A relatives au système 10 et les transmet au téléphone 30. Le module 20 reçoit des ordres B émis par l'éleveur 3 avec son téléphone 30 et les transmet au système 10.

De préférence, les informations A transmissibles au terminal mobile 30 par le module 20 comprennent les suivantes :
- coupure secteur de l'installation 1,
- défaut sur voie 2,
- arrêt sur voie 2,
- retour en butée avant du racleur 12,
- retour en butée arrière du racleur 12,
- seuil de température bas atteint sur la voie 2.

Certaines informations A renseignent l'éleveur 3 sur un arrêt du cycle de raclage.

En réponse, depuis son téléphone 30, l'éleveur 3 peut transmettre les ordres B suivants au système de raclage 10 via le module 20 :
- démarrage du cycle de raclage,
- arrêt du cycle de raclage,
- déplacement du racleur 12 en butée avant,
- déplacement du racleur 12 en butée arrière,
- optionnellement, activation / arrêt du mode hors gel, dans lequel le racleur 12 se déplace en continue entre ses butées avant et arrière.

De préférence, le module 20 est configuré pour envoyer un message régulier au téléphone 30 pour indiquer un état de fonctionnement.

La régularité du message peut être paramétrée, par exemple toutes les six heures, tous les jours à heure fixe, ou toutes les semaines à jour et heure fixe. De préférence, le message est quotidien.

Ce message peut concerner l'état de fonctionnement du système de raclage 10. Lorsque le module 20 indique un fonctionnement correct du système de raclage 10, l'éleveur 3 est rassuré. Lorsque le module 20 indique un dysfonctionnement du système de raclage 10, l'éleveur 3 sait qu'une intervention est nécessaire.

En alternative ou en complément, ce message peut concerner l'état de fonctionnement du module 20. Par exemple, le module 20 peut indiquer quotidiennement à heure fixe qu'il fonctionne, afin de rassurer l'éleveur 3. Si l'éleveur 3 ne reçoit pas ce message à l'heure prédéterminée, il sait que le module 20 ne fonctionne pas et qu'une intervention est nécessaire.

De préférence, le module 20 et le téléphone 30 sont configurés pour communiquer par SMS. A cet effet, tous deux sont équipés d'une carte SIM. De manière connue, le sigle SMS désigne un message court ou texto transmis par « service de messages succincts » (« short message service » en anglais).

En pratique, la communication par SMS est simple, rapide et fiable. Il n'est pas nécessaire d'installer une application dédiée sur le téléphone 30. Celui-ci n'a pas besoin d'être un téléphone évolué (« smartphone » en anglais). Le réseau GSM offre une couverture satisfaisante sur l'ensemble du territoire français.

En alternative ou en complément, le module 20 et le téléphone 30 peuvent être configurés pour communiquer selon tout protocole de communication à distance connu, par exemple selon le protocole Wifi.

D'autres modes de réalisation d'un système de raclage 10 conforme à l'invention sont montrés aux figures 2 à 4. Certains éléments constitutifs de ces systèmes 10 sont comparables à ceux du premier mode de réalisation décrit plus haut et, dans un but de simplification, portent les mêmes références numériques.

Sur la figure 2, l'installation agricole 1 comprend deux voies 2 équipées d'un unique système de raclage 10 à câble. Le système 10 comprend deux racleurs 12 mobiles sur les voies 2, un unique dispositif actionneur 14 et un unique boitier de commande 16.

Le dispositif 14 comprend un câble 41 allongé entre deux treuils arrières 42 et 43 et guidé par deux poulies avant 44 et 45. Le premier racleur 12 est fixé sur le câble 41 entre le treuil 42 et la poulie 44, tandis que le deuxième racleur 12 est fixé sur le câble entre le treuil 43 et la poulie 45. Lorsque le premier racleur 12 est déplacé vers l'avant, alors le deuxième racleur 12 est déplacé vers l'arrière, et inversement.

Sur la figure 3, l'installation 1 comprend une voie 2 équipée d'un système de raclage 10 à chaîne, et non à câble. Le dispositif actionneur 14 comprend une chaîne 46 supportant le racleur 12, un moto-réducteur 47 pour entraîner la chaîne 46 dans un sens ou dans l'autre, et une poulie 48 de guidage de la chaîne 46.

Sur la figure 4, l'installation agricole 1 comprend deux voies 2 équipées d'un unique système de raclage 10 à chaîne. Le système 10 comprend deux racleurs 12 mobiles sur les voies 2, un unique dispositif actionneur 14 et un unique boitier de commande 16. Le dispositif 14 comprend une chaîne 46 supportant les racleurs 12, un moto-réducteur 47 pour entraîner la chaîne 46 dans un sens ou dans l'autre, et quatre poulies 48 de guidage de la chaîne 46. Lorsque le premier racleur 12 est déplacé vers l'avant, alors le deuxième racleur 12 est déplacé vers l'arrière, et inversement.

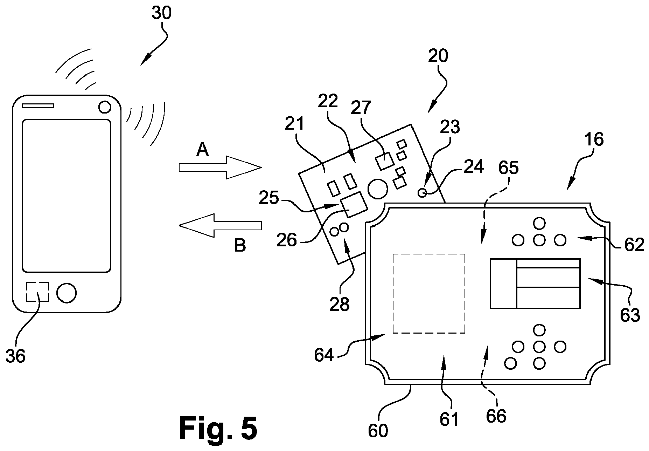

Sur la figure 5, le boitier 16, le module 20 et le téléphone 30 sont représentés plus en détail.

Le boitier 16 comprend un carter 60 muni d'une face avant 61, sur laquelle sont disposés des boutons de commande 62, un dispositif d'affichage 63 et un logo 64 (non représenté en détail). Le boitier 16 comprend également différents composants électroniques 65 et une batterie de sauvegarde 66 disposés dans le carter 60.

Le module 20 comprend une carte électronique 21 et un dispositif 22 de communication sans fil. Le dispositif 22 comprend une embase d'antenne 23, une antenne GSM SMA 24, un support de carte SIM 25, une carte SIM 26 et une unité GSM double bande compatible tout opérateur. L'embase 23, le support 25 et l'unité 27 sont montés sur la carte électronique 21. La carte SIM 26 achetée par l'utilisateur 3 est montée sur le support 25. L'antenne 24, choisie par exemple en fonction de l'étendue de l'élevage, est montée sur son embase 23.

Le module 20 comprend également des diodes électroluminescentes 28 disposées sur la carte électronique 21, par exemple pour indiquer le fonctionnement correct de la carte électronique 21 et le fonctionnement correct du dispositif 22.

Le module 20 est intégré au boitier 16 en connectant la carte électronique 21 aux composants électroniques 65 et à la batterie de sauvegarde 66. Avantageusement, la carte électronique 21 peut être équipée de deux embases RJ45 pour être intégrées entre la carte afficheur et la carte puissance du boitier 16.

De préférence, le module 20 est configuré pour recevoir des données de mise à jour à distance, sans intervention manuelle de l'éleveur 3.

L'installation agricole 1, le système de raclage 10, le boitier 16, le module 20 et le terminal mobile 30 peuvent être conformés différemment des figures 1 à 5 sans sortir du cadre de l'invention.

En variante non représentée, l'installation 1 peut comporter plus de deux voies 2, par exemple quatre voies 2.

Selon une autre variante non représentée, le système de raclage 10 peut présenter toute construction adaptée à l'application visée, notamment en fonction de l'étendue de la voie 2 et de la configuration du sol.

Selon une autre variante non représentée, le terminal mobile 30 associé au module 20 peut être une tablette numérique, une montre connectée, ou tout autre appareil électronique mobile différent d'un téléphone.

En outre, les caractéristiques techniques des différents modes de réalisation et variantes mentionnés ci-dessus peuvent être, en totalité ou pour certaines d'entre elles, combinées entre elles.

Ainsi, l'installation 1, le système 10 et le module 20 peuvent être adaptés en termes de coût, d'ergonomie, de fonctionnalités et de performance.

## Revendications

1. Module (20) de commande à distance d'un système de raclage (10) équipant une installation agricole (1), le module (20) comprenant un dispositif de communication sans fil (22) configuré pour transmettre, d'une part, au moins certaines informations (A) en provenance du système de raclage (10) vers un terminal mobile (30) et, d'autre part, des ordres (B) en provenance du terminal mobile (30) vers le système de raclage (10).

2. Module (20) selon la revendication 1, **caractérisé en ce que** le dispositif de communication sans fil (22) comprend une carte SIM (26) et est configuré pour envoyer les informations (A) et recevoir les ordres (B) par SMS.

3. Module (20) selon l'une des revendications précédentes, **caractérisé en ce que** les informations (A) transmissibles au terminal mobile (30) par le module (20) comprennent les suivantes :
- retour en butée avant,
- retour en butée arrière
et **en ce que** les ordres (B) transmissibles au système de raclage (10) par le module (20) comprennent les suivants :
- déplacement en butée avant,
déplacement en butée arrière.

4. Module (20) selon l'une des revendications précédentes, **caractérisé en ce que** les informations (A) transmissibles au terminal mobile (30) par le module (20) comprennent les suivantes :
- coupure secteur,
- défaut sur voie,
- arrêt sur voie,
- seuil de température bas atteint.

5. Module (20) selon l'une des revendications précédentes, **caractérisé en ce que** les ordres (B) transmissibles au système de raclage (10) par le module (20) comprennent les suivants :
- démarrage cycle de raclage,
- arrêt cycle de raclage,
- optionnellement, activation / arrêt du mode hors gel.

6. Module (20) selon l'une des revendications précédentes, **caractérisé en ce que** le module (20) est configuré pour envoyer un message régulier au terminal mobile (30) pour indiquer un état de fonctionnement.

7. Module (20) selon la revendication 6, **caractérisé en ce que** la fréquence du message est paramétrable dans le module (20), par exemple toutes les six heures, tous les jours à heure fixe, ou toutes les semaines à jour et heure fixe.

8. Module (20) selon l'une des revendications 6 ou 7, **caractérisé en ce que** le message est quotidien.

9. Module (20) selon l'une des revendications 6 à 8, **caractérisé en ce que** le message concerne l'état de fonctionnement du système de raclage (10).

10. Module (20) selon l'une des revendications 6 à 9, **caractérisé en ce que** le message concerne l'état de fonctionnement du module (20).

11. Module (20) selon l'une des revendications précédentes, **caractérisé en ce que** le module (20) est configuré pour recevoir des données de mise à jour à distance, sans intervention manuelle.

12. Système de raclage (10), comprenant :
- au moins un racleur (12) mobile dans une aire (2) prévue pour recevoir des animaux ;
- un dispositif actionneur (14) prévu pour déplacer le racleur (10) dans une direction avant (D1) ou une direction arrière (D2),
- un boitier de commande (16) prévu pour commander le dispositif actionneur (14), et
- un module (20) selon l'une des revendications 1 à 11, connecté au boitier de commande (16).

13. Système de raclage (10) selon la revendication 12, **caractérisé en ce que** le module (20) est intégré au boitier de commande (16).

14. Installation agricole (1), comprenant :
- une aire (2) prévue pour recevoir des animaux ;
- un système de raclage (10) incluant :
- au moins un racleur (12) mobile dans l'aire (2),
- un dispositif actionneur (14) prévu pour déplacer le racleur (12) dans une direction avant (D1) ou une direction arrière (D2), et
- un boitier de commande (16) prévu pour commander le dispositif actionneur (14) ;
- un module (20) selon l'une des revendications 1 à 11, connecté au boitier de commande (16) ; et
- un terminal mobile (30) qui, via le module (20), reçoit des informations (A) relatives au système de raclage (10) et envoie des ordres (B) au système de raclage (10).

15. Procédé de commande à distance d'un système de raclage (10) équipant une installation agricole (1) selon la revendication 14, le procédé étant **caractérisé en ce que** :
- le module (20) reçoit en continue des informations (A) du système de raclage (10), et transmet au moins certaines de ces informations (A) au terminal mobile (30) ;
- sur le terminal mobile (30), un éleveur (3) peut consulter les informations (A) reçues du module (20) et, en réponse, envoyer des ordres (B) au module (20), qui les transmet au boitier de commande (16) du système de raclage (10).
